# EUROPEAN PATENT APPLICATION

(11) **EP 3 385 237 A1**
(43) Date of publication of application: **10.10.2018**
(21) Application number: 16870595.2
(22) Date of filing: 28.11.2016
(51) Int. Cl.: C03C 27/12, B32B 17/10, E06B 3/66

(54) **LAMINATED GLASS**

(30) Priority: 30.11.2015 JP 2015233448
(71) Applicant: AGC Inc., Tokyo 100-8405 (JP)
(72) Inventor: AOKI Tokihiko, Tokyo 100-8405 (JP)
(74) Representative: Müller-Boré & Partner Patentanwälte PartG mbB
(86) International application number: PCT/JP2016/085166
(87) International publication number: WO 2017/094658

(57) **Abstract**

There is provided a laminated glass in which reduction in design and productivity due to an overflow portion of an intermediate film is improved. A laminated glass includes: a pair of glass plates facing each other; and an intermediate film having one or more layers provided between the pair of glass plates, in which the intermediate film has an adhesive layer whose storage modulus satisfies, in dynamic viscoelasticity measurement at a measurement frequency of 10 Hz, a requirement (1) in which the storage modulus has a maximum value of 2.3 × 10⁶ Pa or more in a temperature range of 90 to 120°C, and a requirement (2) in which the storage modulus has any value within a range of 1.0 × 10⁸ to 4.0 × 10⁸ Pa in a temperature range of 20 to 40°C.

## Description

### TECHNICAL FIELD

The present invention relate to a laminated glass, and particularly relate to a laminated glass excellent in design and productivity.

### BACKGROUND

A laminated glass is normally manufactured in a manner that plural glass plates which are cut in the same shape and an intermediate film are laminated so as to sandwich the intermediate film between the glass plates and subjected to thermocompression bonding. The intermediate film is a film made of resin, and even when it is produced in a shape same as that of the glass plates at the time of the aforementioned lamination, the intermediate film generally has, in the laminate after being subjected to the thermocompression bonding, an overflow portion which protrudes from outer peripheries of the glass plates.

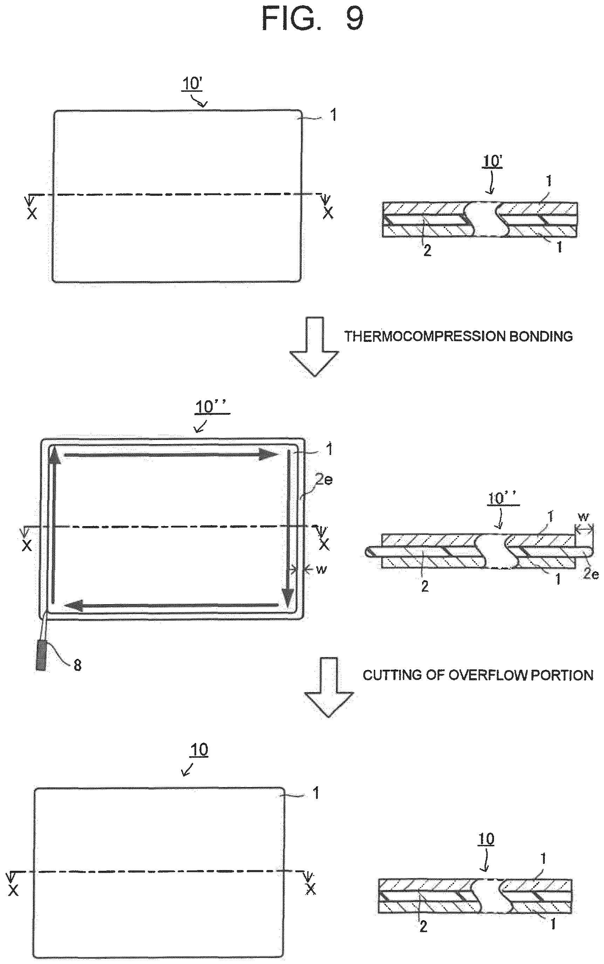

Accordingly, as illustrated in FIG. 9, for example, there is carried out an overflow portion cutting step in which, in a laminated glass precursor 10" obtained by performing thermocompression bonding on a laminate 10' having an intermediate film 2 sandwiched between two glass plates 1, 1, an overflow portion 2e (with a width w) of the intermediate film 2 which protrudes from outer peripheries of the glass plates 1, 1 is cut along outer peripheral edges of the glass plates 1, 1 by using a cutter 8 or the like. In a manner as described above, there is obtained a laminated glass 10 in which end portions of the glass plates 1, 1 and an end portion of the intermediate film 2 are aligned.

However, the above-described cutting step has been a cause of deteriorating productivity of the laminated glass in a manner such that it takes time and it requires a special device owing to hardness and viscosity depending on a type of the intermediate film to be used. Besides, there has been a problem that, due to a similar reason, quality of finishing end portions varies for each product of the laminated glass and thus it is difficult to obtain a product with high design property. Particularly, in the laminated glass having various functional films, the above-described problem has been more significant since it is manufactured by making the functional films to be sandwiched between two layers of intermediate films.

In order to deal with the above-described problem, for example, Patent Reference 1 has proposed that, in order to omit a cutting step of an overflow portion, it is configured such that an outer peripheral edge of one glass plate is overlapped with or positioned on the inside of an outer peripheral edge of the other glass plate, so that design is not impaired even if a remaining intermediate film exists. However, accurate alignment is required for overlapping the outer peripheral edges of the two glass plates along the entire outer periphery, and further, to make the outer peripheral edge of one glass plate position on the inside of the outer peripheral edge of the other glass plate has a problem in terms of reduction in strength of the outer peripheral edge of the laminated glass.

### PRIOR ART DOCUMENT

### PATENT REFERENCE

Patent Reference 1: JP-ANo. 2013-129552

### SUMMARY OF THE INVENTION

### PROBLEMS TO BE SOLVED BY THE INVENTION

The present invention has been made from the above viewpoints, and an object thereof is to provide a laminated glass in which reduction in design and productivity due to an overflow portion of an intermediate film is improved.

### MEANS FOR SOLVING THE PROBLEMS

A laminated glass of the present invention includes: a pair of glass plates facing each other; and an intermediate film having one or more layers provided between the pair of glass plates, in which the intermediate film has an adhesive layer whose storage modulus satisfies the following requirements (1) and (2) in dynamic viscoelasticity measurement at a measurement frequency of 10 Hz:
(1) the storage modulus has a maximum value of 2.3 × 10⁶ Pa or more in a temperature range of 90 to 120°C; and
(2) the storage modulus has any value within a range of 1.0 × 10⁸ to 4.0 × 10⁸ Pa in a temperature range of 20 to 40°C.

### EFFECT OF THE INVENTION

According to the present invention, it is possible to provide a laminated glass in which reduction in design and productivity due to an overflow portion of an intermediate film is improved. Particularly, it is possible to provide a laminated glass having a functional film inside thereof in which reduction in design and productivity is improved.

### BRIEF DESCRIPTION OF THE DRAWINGS

[FIG. 1] is a sectional view of one example of an embodiment of the laminated glass of the present invention.
[FIG 2] is a sectional view of a modified example of the embodiment of the laminated glass of the present invention.
[FIG 3] is a sectional view of a modified example of the embodiment of the laminated glass of the present invention.
[FIG 4] is a sectional view of a modified example of the embodiment of the laminated glass of the present invention.
[FIG 5] is a sectional view of a modified example of the embodiment of the laminated glass of the present invention.
[FIG 6] is a view illustrating a relationship between a temperature and a storage modulus when a dynamic viscoelasticity of an adhesive layer is measured.
[FIG 7] is a view schematically illustrating a pressure-bonding process of a laminated glass sample used in a simulation.
[FIG. 8] is a sectional view of the laminated glass sample used in the simulation.
[FIG. 9] is a view schematically illustrating a cutting step of an overflow portion at a time of manufacturing the laminated glass.

### MODES FOR CARRYING OUT THE INVENTION

Hereinafter, embodiments of the present invention will be described. Note that the present invention is not limited to these embodiments, and these embodiments can be changed or modified without departing from the spirit and scope of the present invention.

A laminated glass of the present invention includes: a pair of glass plates facing each other; and an intermediate film having one or more layers provided between the pair of glass plates, in which the intermediate film has an adhesive layer whose storage modulus satisfies the following requirements (1) and (2) in dynamic viscoelasticity measurement at a measurement frequency of 10 Hz:
(1) the storage modulus has a maximum value of 2.3 × 10⁶ Pa or more in a temperature range of 90 to 120°C; and
(2) the storage modulus has any value within a range of 1.0 × 10⁸ to 4.0 × 10⁸ Pa in a temperature range of 20 to 40°C.

In the present specification, a peripheral edge portion of a main surface of an article having a plate shape or a film shape, means a region having a certain width from an outer periphery toward a center portion of the main surface. The peripheral edge portions and end faces of both main surfaces of the article are collectively referred to as end portions. Further, in the present specification, an outer periphery side when viewed from the center portion of the main surface of the glass plate is referred to as an outside, and a center portion side when viewed from the outer periphery is referred to as an inside.

In the present specification, the storage modulus indicates a storage modulus measured in dynamic viscoelasticity measurement at a measurement frequency of 10 Hz, unless otherwise noted. The storage modulus is an index indicating stiffness of a resin film or the like. In the present specification, an adhesive layer whose storage modulus satisfies the above-described requirements (1) and (2) is also referred to as an adhesive layer (S).

In the laminated glass of the present invention, when the adhesive layer (S) included in the intermediate film satisfies the above-described requirement (1) in terms of the storage modulus, namely, when the adhesive layer (S) has predetermined stiffness in a temperature range in which thermocompression bonding is performed, it is possible to reduce a formation amount of an overflow portion while securing desired adhesiveness. In the laminated glass of the present invention, when the adhesive layer (S) further satisfies the above-described requirement (2) in terms of the storage modulus, namely, when the adhesive layer (S) has predetermined stiffness in a room temperature range in which cutting of the overflow portion is performed, it becomes possible to perform the cutting realizing good design and good production efficiency.

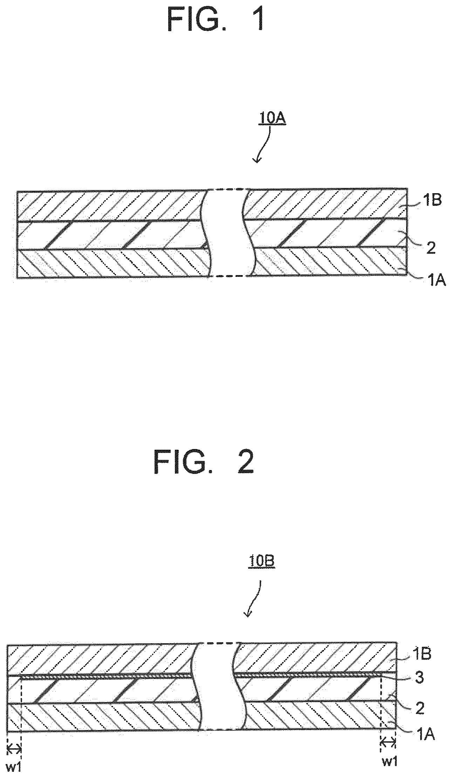

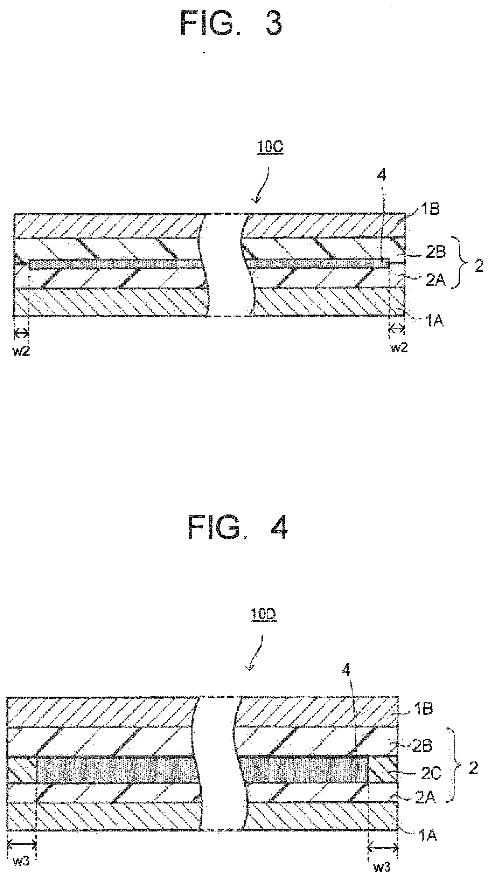

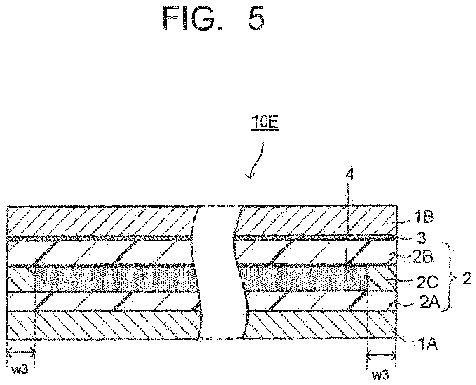

Hereinafter, embodiments of the laminated glass of the present invention will be described while referring to the drawings. FIG. 1 is a sectional view in one example of an embodiment of the laminated glass of the present invention configured of glass plates and an intermediate film. FIG. 2 is a sectional view in one example of an embodiment in which the glass plate in the laminated glass of the present invention is configured to have a functional coating layer. Each of FIG. 3 and FIG. 4 is a sectional view in one example of an embodiment configured to have a functional film between intermediate films in the laminated glass of the present invention. FIG 5 is a sectional view in one example of an embodiment of the laminated glass of the present invention having both of the functional coating layer and the functional film.

A laminated glass 10A illustrated in FIG. 1 has a pair of glass plates 1A and 1B facing each other, and an intermediate film 2 arranged so as to be sandwiched by the pair of glass plates 1A and 1B. In the laminated glass 10A, the pair of glass plates 1A and 1B, and the intermediate films 2 have rectangular main surfaces with substantially the same shape and dimensions. In the laminated glass 10A, the intermediate film 2 is configured of the adhesive layer (S).

In the present specification, "substantially the same shape and dimensions" means having the same shape and the same dimensions as viewed by people and, for example, a case where one has an outer periphery shape having no concavity and convexity such as a cutout and the other has an outer periphery shape having a fine cutout or the like on a part thereof, is also included in the category thereof. Also in other cases, "substantially" indicates the same meaning as above. Hereinafter, respective components which compose the laminated glass 10A will be described.

### (Glass plate)

As a material of the glass plates 1A and 1B used for the laminated glass 10A in the embodiment of the present invention, there can be cited transparent inorganic glass and organic glass (resin). As the inorganic glass, ordinary soda lime glass (which is also referred to as soda lime silicate glass), aluminosilicate glass, borosilicate glass, non-alkali glass, quartz glass, and the like are used without any particular limitation. Among the above, the soda lime glass is particularly preferable. A forming method thereof is also not particularly limited and, for example, float plate glass formed by a float process or the like is preferable.

As the organic glass (resin), there can be cited a polycarbonate resin, a polystyrene resin, an aromatic polyester resin, an acrylic resin, a polyester resin, a polyarylate resin, a polycondensate of halogenated bisphenol A and ethylene glycol, an acrylic urethane resin, a halogenated aryl group-containing acrylic resin, and the like. Among the above, the polycarbonate resin such as an aromatic polycarbonate resin and the acrylic resin such as a polymethyl methacrylate-based acrylic resin are preferable, and the polycarbonate resin is more preferable. Further, among polycarbonate resins, a bisphenol A-based polycarbonate resin is particularly preferable. Note that the glass plate may be composed by containing two or more kinds of the above resins.

As the above glass, a colorless and transparent material with no coloring component added thereto may be used, or a colored and transparent material colored within the range not impairing the effect of the present invention may be used. Moreover, one kind of the glass may be used or two or more kinds of the glass may be used in combination, and for example, a laminated substrate may be made by laminating two or more layers. Although depending on the application place of the laminated glass, the inorganic glass is preferable as the glass.

The pair of glass plates 1A and 1B used for the laminated glass 10A may be made of mutually different kinds of materials, but, they are preferably made of the same kind of material. A shape of each of the glass plates 1A and 1B may be flat or may have entirely or partially a curvature. A thickness of each of the glass plates 1A and 1B can be appropriately selected according to the usage of the laminated glass 10A. Generally, the thickness of each of the glass plates is preferably 0.5 to 5 mm, it is more preferably 1.1 to 3.5 mm, and particularly preferably 1.6 to 3.0 mm from a viewpoint of realizing both of weight reduction and stiffness of the laminated glass.

Further, the glass plates 1A and 1B may have a coating that imparts a water repellent function, a hydrophilic function, an antifogging function, and the like to an exposed surface exposed to the atmosphere. Further, the surfaces opposing each other of the glass plates 1A and 1B may have functional coatings such as a low-emissivity coating, an infrared cut coating, and a conductive coating, as in a laminated glass 10B to be described later illustrated in FIG. 2.

Further, generally, the laminated glass is sometimes provided with a black ceramic layer in a band shape at a part or all of peripheral edge portions of main surfaces of glass plates that form the laminated glass for the purpose of hiding a portion attached to a frame body or the like of the laminated glass, a wiring conductor and so on. Also in the laminated glass of the present invention, it is possible to provide such a black ceramic layer, as another layer, on either or both of the glass plates 1A and 1B.

### (Intermediate film)

The intermediate film 2 in the laminated glass 10A is configured of a flat membrane-like adhesive layer (S) having a main surface with substantially the same shape and same dimensions as those of the main surfaces of the glass plates 1A and 1B and having a thickness as described below.

The adhesive layer (S) has a storage modulus which satisfies the following requirements (1) and (2) in dynamic viscoelasticity measurement at a measurement frequency of 10 Hz.
(1) The storage modulus has a maximum value of 2.3 × 10⁶ Pa or more in a temperature range of 90 to 120°C.
(2) The storage modulus has any value within a range of 1.0 × 10⁸ to 4.0 × 10⁸ Pa in a temperature range of 20 to 40°C.

Note that the storage modulus in the present specification can be measured by making a sample to be subjected to a dynamic viscoelasticity test performed under a condition of a frequency of 10 Hz, by a shearing method using, for example, DVA220 manufactured by IT Keisoku Seigyo K.K.

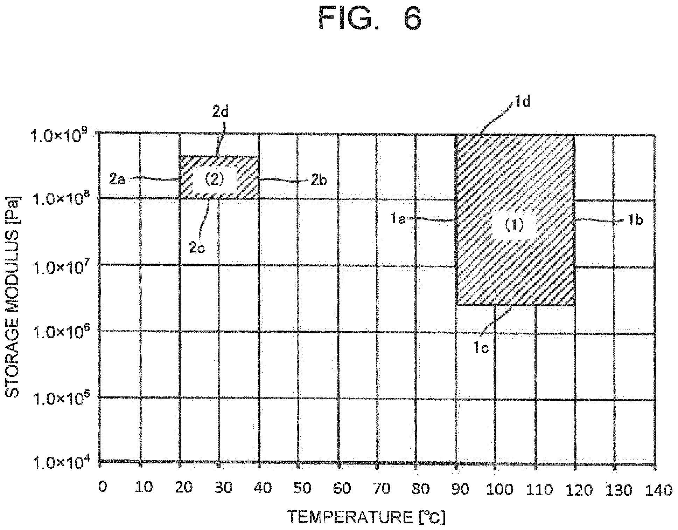

The above-described requirement (1) and requirement (2) define the storage moduli in the respective temperature ranges of the adhesive layer measured as described above. FIG 6 is a view illustrating a coordinate range (1) and a coordinate range (2) on coordinates in which a horizontal axis is set to a temperature [°C] and a vertical axis is set to a storage modulus [Pa], for explaining the requirement (1) and the requirement (2) satisfied as the adhesive layer (S). Note that the vertical axis in FIG. 6 is an exponential axis.

The coordinate range (1) illustrated in FIG. 6 is a rectangular range surrounded by an axis 1a indicating a temperature of 90°C, an axis 1b indicating a temperature of 120°C, an axis 1c indicating a storage modulus of 2.3 × 10⁶ Pa, and an axis 1d indicating a maximum value on the vertical axis of the storage modulus. Note that the maximum value of the storage modulus is infinite in the requirement (1), so that explanation will be made by assuming that the axis 1d in the coordinate range (1) indicates the infinite.

When the adhesive layer (S) satisfies the requirement (1), this means that, when a graph (line) indicating a measured result of the storage modulus of the adhesive layer (S) is written down on the coordinates in FIG. 6, there is a range where the graph (line) overlaps with the coordinate range (1). The range where the graph (line) overlaps with the coordinate range (1) may be a point or a range of a predetermined length. Specifically, the storage modulus of the adhesive layer (S) may satisfy 2.3 × 10⁶ Pa or more at only one point of a specific temperature between 90 and 120°C, or it may satisfy 2.3 × 10⁶ Pa or more in the entire temperature range. Note that the adhesive layer (S) preferably has the maximum value of the storage modulus in the temperature range of 90 to 120°C of 2.0 × 10⁸ Pa or less in the dynamic viscoelasticity measurement at the measurement frequency of 10 Hz.

It is preferable that the storage modulus of the adhesive layer (S) has any value within a range of 2.3 × 10⁶ Pa or more and less than 1.0 × 10⁷ Pa in the temperature range of 90 to 120°C. Specifically, the coordinate range (1), the axis 1a indicating the temperature of 90°C, the axis 1b indicating the temperature of 120°C, and the axis 1c indicating the storage modulus of 2.3 × 10⁶ Pa illustrated in FIG 6 are set to be the same as above, and the axis 1d indicating the upper limit of the storage modulus is set as an axis indicating 1.0 × 10⁷ Pa, and it is preferable that there is a range where a rectangular range surrounded by these axes except for a range on the axis 1d and the graph (line) indicating the measured result of the storage modulus of the adhesive layer (S) overlap with each other.

The temperature range of 90 to 120°C that defines the requirement (1) is normally a temperature range in which even when the laminated glass includes a functional film or the like which is more likely to be influenced by the temperature, it is possible to perform thermocompression bonding without exerting influence on components thereof. By satisfying the requirement (1) in which the maximum value of the storage modulus of the adhesive layer (S) in the temperature range of 90 to 120°C is 2.3 × 10⁶ Pa or more, it is possible to reduce a formation amount of an overflow portion while securing desired adhesiveness in the obtained laminated glass.

Note that when the maximum value of the storage modulus in the temperature range of 90 to 120°C is less than 2.3 × 10⁶ Pa, flowability of the entire intermediate film including the adhesive layer becomes large, which significantly increases the formation amount of the overflow portion during the thermocompression bonding. Further, when a minimum value of the storage modulus in the temperature range of 90 to 120°C is equal to or more than 1.0 × 10⁷ Pa, the flowability of the intermediate film including the adhesive layer is sometimes impaired during the thermocompression bonding, resulting in that a sufficient adhesive function may not be exhibited.

The coordinate range (2) illustrated in FIG 6 is a rectangular range surrounded by an axis 2a indicating a temperature of 20°C, an axis 2b indicating a temperature of 40°C, an axis 2c indicating a storage modulus of 1.0 × 10⁸ Pa, and an axis 2d indicating a storage modulus of 4.0 × 10⁸ Pa.

When the adhesive layer (S) satisfies the requirement (2), this means that, when a graph (line) indicating a measured result of the storage modulus of the adhesive layer (S) is written down on the coordinates in FIG. 6, there is a range where the graph (line) overlaps with the coordinate range (2), similarly to the case of the aforementioned requirement (1). The range where the graph (line) overlaps with the coordinate range (2) may be a point or a range of a predetermined length. Specifically, the storage modulus of the adhesive layer (S) may satisfy 1.0 × 10⁸ to 4.0 × 10⁸ Pa at only one point of a specific temperature between 20 and 40°C, or it may satisfy 1.0 × 10⁸ to 4.0 × 10⁸ Pa in the entire temperature range.

The temperature range of 20 to 40°C that defines the requirement (2) is a room temperature range, and is a temperature range in which cutting of the overflow portion in the laminated glass is performed. By satisfying the requirement (2) in which the storage modulus of the adhesive layer (S) has any value in the range of 1.0 × 10⁸ to 4.0 × 10⁸ Pa in the temperature range of 20 to 40°C, it becomes possible to perform the cutting of the overflow portion with good design and production efficiency in the obtained laminated glass.

Note that when the maximum value of the storage modulus in the temperature range of 20 to 40°C is less than 1.0 × 10⁸ Pa, the entire intermediate film including the adhesive layer is pulled to be deformed, and is cut in that state in the cutting step of the overflow portion, which deteriorates an edge quality of the laminated glass. Further, when the minimum value of the storage modulus exceeds 4.0 × 10⁸ Pa in the temperature range of 20 to 40°C, it becomes quite difficult to perform the cutting step of the overflow portion by using an ordinary device, and thus it is not possible to cut the overflow portion without a special device.

A relationship between storage moduli in the above-described respective temperature ranges and physical properties of the adhesive layer was checked through a simulation of the following method. Specifically, commercially available four kinds of adhesive films were prepared, a dynamic viscoelasticity test was performed by using the DVA220 manufactured by IT Keisoku Seigyo K.K. at a temperature from -50°C to the vicinity of 150°C in a manner that the temperature was lowered from the room temperature to -50°C and then the temperature was raised at a rate of 2°C per minute under a condition of a frequency of 10 Hz, and the storage modulus at each temperature was measured.

The used adhesive films were, two kinds of MELTHNE G7055 and MELTHNE G7060 (product name) manufactured by TOSOH CORPORATION and each having a thickness of 0.4 mm, as EVA films, RK11 (product name) manufactured by Eastman Chemical Company and having a thickness of 0.3 8 mm, as a PVB film, and SentryGlas (product name) manufactured by KURARAY CO., LTD. and having a thickness of 1.1 mm, as an ionomer resin film. Results are as presented in Table 1.

**[Table 1]**

| ADHESIVE FILM (PRODUCT NAME) / MEASUREMENT TEMPERATURE | Storage modulus [Pa] | | | |
|---|---|---|---|---|
| | 20°C | 40°C | 90°C | 120°C |
| SENTRYGLAS | 7.1×10⁸ | 4.0×10⁸ | 2.2×10⁶ | 4.3×10⁵ |
| MELTHNE G7055 | 9.4×10⁷ | 5.3×10⁷ | 3.9×10⁵ | Impossible to measure |
| MELTHNE G7060 | 1.1×10⁷ | 7.6×10⁶ | 5.8×10⁵ | Impossible to measure |
| RK11 | 4.8×10⁷ | 2.7×10⁶ | 1.1×10⁶ | 5.9×10⁵ |

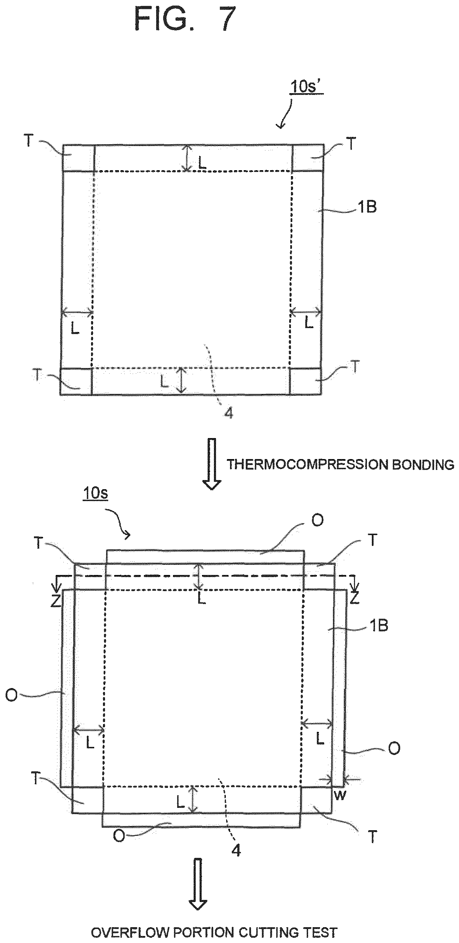

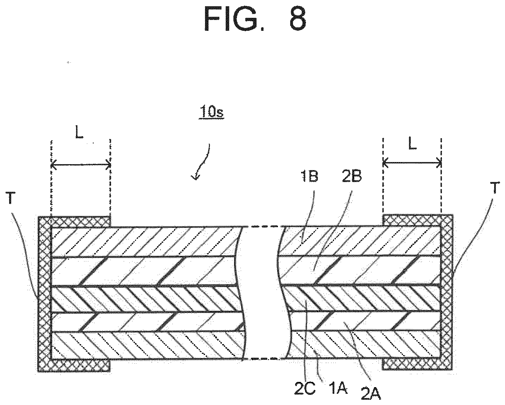

Each of laminated glass samples 10s (a precursor before cutting an overflow portion) illustrated in FIG 7 and FIG. 8 was produced by using these adhesive films, and a relationship between the requirement (1) and the formation amount of the overflow portion and a relationship between the requirement (2) and the cuttability of the overflow portion were examined. Note that the laminated glass sample 10s is a precursor before cutting an overflow portion for obtaining the laminated glass similar to the laminated glass having a cross section illustrated in FIG 4 and configured to include the functional film between the intermediate films. As the functional film, a SPD light-control film (LCF-1103DHA90 manufactured by Hitachi Chemical Company, Ltd., with a thickness of 0.35 mm) was used. Note that FIG. 8 is a sectional view taken along a line Z-Z of the laminated glass sample 10s obtained by applying temporary fixing tapes T for test illustrated in FIG 7 and performing thermocompression bonding.

The laminated glass sample before cutting the overflow portion was produced in the following manner. On a glass plate 1A (150 mm square soda lime glass with a thickness of 2 mm), an adhesive film 2A of 150 × 150 mm was arranged so that its four sides were aligned with four sides of the glass plate, and further, on the above, the same film 2C (with inner dimensions of 80 × 80 mm) in a frame shape and having an outer dimension same as that of the glass plate was arranged so that four sides thereof were aligned with the four sides of the glass plate. Note that only in the combination with the SentryGlas, RK11 was used as the frame film. On the inside of the same frame film 2C, a SPD light-control film 4 cut into 80 × 80 mm was arranged so as not to overlap with the frame. Further, the adhesive film 2B and the glass plate 1B same as those of the above were overlaid in order on them without displacement, and temporary fixing tapes T each having a width (L) of 35 mm were stuck to corner portions of the four sides for realizing slip prevention and suppression of overflow of the adhesive film at the corner portions, to thereby obtain a laminate 10s'.

The laminate 10s' was put in a vacuum bag, and retained for one hour at 90°C, 100°C, 110°C, or 120°C while pressure-reduction deaeration was performed so that a pressure in the vacuum bag became a pressure reduction degree of -60 kPa or less, to thereby perform thermocompression bonding. Widths (w) of overflow portions O of the adhesive film 2 generated at portions except for portions on which the temporary fixing tapes T were applied of the laminated glass sample 10s obtained through the thermocompression bonding were measured using a microscope. Average values (µm) of the widths (w) of the overflow portions O of four sides are presented in Table 2. It is preferable that the average value (µm) of the widths (w) of the overflow portions O of four sides is 100 µm or less. Note that only the laminated glass sample using the SentryGlas has the thickness which is different from that of the other samples, so that sheet thickness conversion was performed and the width of the overflow portion was set to be obtained by multiplying the measured value by 0.46. The multiplier was set to 0.46 because of 1.2 mm / 2.58 mm = 0.46, in which the total thickness of the adhesive films of the laminated glass sample using the SentryGlas was 1.1 mm × 2 + 0.38 mm = 2.58 mm, and the total thickness of the adhesive films of the other laminated glass samples was 0.4 mm × three pieces = 1.2 mm

As a result of this, although the average value of the widths of the overflow portions of each of the obtained laminated glass samples did not satisfy the above-described preferable range, it was derived that, from the obtained results, when the storage modulus of the adhesive film 2 in the dynamic viscoelasticity measurement at the measurement frequency of 10 Hz has the maximum value of 2.3 × 10⁶ Pa or more in the temperature range of 90 to 120°C, the preferable range of the width of the overflow portion is satisfied.

**[Table 2]**

| Adhesive film (product name) / pressure-bonding temperature | Width of overflow portion [µm] | | | |
|---|---|---|---|---|
| | 90 °C | 100 °C | 110 °C | 120 °C |
| SENTRYGLAS | 106 | 149 | 188 | 219 |
| MELTHNE G7055 | 464 | 708 | 656 | 710 |
| MELTHNE G7060 | 443 | 535 | 519 | 555 |
| RK11 | 165 | 285 | 276 | 317 |

Next, the obtained laminated glass sample 10s was subjected to a test of cutting the overflow portions O. A single-edged cutter normally used for cutting overflow portions when producing the laminated glass was used as a cutter, cutting was performed so that the cutting edge was placed to be parallel to end faces of the glass plates 1B and 1A and perpendicular to main surfaces of the glass plates 1B and 1A, and a state of the cut overflow portions was checked. The cutting test was carried out at environmental temperatures of 20°C and 40°C.

Regarding the results thereof, in the SentryGlas, the cutting was difficult to be performed at 20°C, but, it has cuttability with no problems at 40°C. Regarding G7055, the cut surface of the adhesive film was in an undulated state at 20°C and 40°C, and thus there was a problem in terms of design. Regarding G7060, the adhesive film was extended in a rubber state at 20°C and 40°C so that the cutting was stopped, which is a problem in terms of production efficiency, and it also cannot be said that the design of the cut surface is good. Regarding RK11, a result similar to that of G7055 was obtained at 20°C, and a result similar to that of G7060 was obtained at 40°C.

In the present invention, the characteristic of the adhesive layer (S) is defined by setting that, based on such a test regarding the commercially available adhesive films, the formation amount of the overflow portions can be suppressed to fall within a practical range while maintaining the adhesiveness if the aforementioned requirement (1) is satisfied, and besides, the cutting of the overflow portions can be performed without impairing the design and the production efficiency if the requirement (2) is satisfied.

Concretely, the adhesive layer (S) is obtained in a manner that a material is selected from a thermoplastic resin being a main material composing an intermediate film which is normally used for the laminated glass so that the above-described storage modulus satisfies the requirement (1) and the requirement (2), to thereby produce an adhesive layer. As long as the obtained adhesive layer can be adjusted to have the above-described storage modulus, the kind of the thermoplastic resin to be used is not particularly limited.

Concrete examples of the thermoplastic resin include thermoplastic resins which are conventionally used as intermediate films, such as a polyvinyl acetal resin such as a polyvinyl butyral resin (PVB), a polyvinyl chloride resin, a saturated polyester resin, a polyurethane resin, an ethylene-vinyl acetate copolymer resin (EVA), an ethylene-ethyl acrylate copolymer resin, an ionomer resin, and a cycloolefin polymer (COP) in which storage moduli thereof are adjusted to be the aforementioned storage modulus. These thermoplastic resins may be used independently or two or more kinds of them may be used in combination.

The thermoplastic resin is selected according to usage of the laminated glass and in consideration of balance among various properties such as transparency, weather resistance, adhesive strength, permeable resistance, impact energy absorbency, moisture resistance, and heat insulating property, in addition to the condition of the storage modulus. From such a viewpoint, PVB, EVA, ionomer resin, COP, and the like are preferable as the thermoplastic resins.

In order to adjust the thermoplastic resins as above so that the storage moduli thereof satisfy the requirements (1) and (2), for example, regarding the EVA, in order to increase a storage modulus of one having a low storage modulus as a whole, like the commercially available product used in the aforementioned test, there can be cited adjustment such that a unit quantity of vinyl acetate in a copolymer is set to be less than 15 mass%. In like manner, regarding the PVB as well, in order to increase a storage modulus of one having a low storage modulus as a whole, like the commercially available product used in the aforementioned test, there can be cited adjustment such that a composition is adjusted to reduce an amount of plasticizer.

Further, regarding the ionomer resin, for example, there can be cited adjustment such that, in order to reduce a storage modulus in a room temperature range in an ionomer resin in which a copolymer of ethylene and (meth)acrylic acid, (meth)acrylic ester, or the like is bridged by metal ions, a unit quantity of ethylene with respect to (meth)acrylic acid, (meth)acrylic ester, or the like is set to be less than 60 mass%, or a neutralization amount of the metal ions is set to be less than 60 mol%. Further, regarding the ionomer resin, there can be cited adjustment such that, in order to increase the storage modulus at 90 to 120°C, a proportion of (meth)acrylic acid or (meth)acrylic ester with respect to ethylene is set to less than 10 mass%.

In the COP, it is possible to increase the storage modulus by increasing a proportion of wA and it is possible to reduce the storage modulus by reducing the proportion of wA in a resin composition containing a modified block copolymer hydride [3] which is obtained by introducing an alokoxysilyl group into a block copolymer hydride [2] which is obtained by hydrogenating 90% or more of the entire unsaturated bond of a block copolymer [1] made of at least two polymer blocks [A] in which a repeating unit derived from an aromatic vinyl compound is set as a main component and at least one polymer block [B] in which a repeating unit derived from a chain conjugated diene compound is set as a main component, and having a ratio between wA and wB (wA:wB) of 30:70 to 60:40 in which a weight fraction of the entire polymer block [A] to the entire block copolymer is set to wA and a weight fraction of the entire polymer block [B] to the entire block copolymer is set to wB.

Note that the adhesive layer (S) is preferably embossed when it is prepared as the adhesive film or the like at the time of manufacturing the laminated glass. Normally, a material film to be an intermediate film of the laminated glass is embossed, and when the material film is sandwiched between glass plates to be formed as a laminate and then subjected to thermocompression bonding, the embossment functions as an air passage, which realizes performance of the thermocompression bonding while sufficiently exhausting air between layers of the laminate, and finally, the material film from which the embossment disappears is turned into the intermediate film, resulting in that a high-quality laminated glass with no residual bubbles can be obtained. Note that there is no difference in the characteristic of the storage modulus between the adhesive film and the adhesive layer (S).

A depth indicating a level difference of the embossment is appropriately adjusted depending on the storage modulus of the adhesive film in the temperature range in which the thermocompression bonding is performed. For example, in an adhesive film whose storage modulus is 2.3 × 10⁶ Pa or more and less than 1.0 × 10⁷ Pa in the temperature range of 90 to 120°C, the depth of the embossment is preferably 10 to 45 µm. If a relationship between the storage modulus in the temperature range of 90 to 120°C and the depth of the embossment in the adhesive film falls within the above-described range, when the laminated glass is obtained in which the adhesive film is turned into the adhesive layer (S), there is no embossed shape remains.

Note that a thickness of the intermediate film 2 made of the adhesive layer (S) is not particularly limited. Concretely, the thickness of the intermediate film 2 is preferably 0.4 mm or more and less than 4.0 mm, and more preferably 0.6 to 2.0 mm, similarly to an intermediate film which is normally used for the laminated glass and the like. When the thickness of the intermediate film 2 is less than 0.4 mm, it is sometimes impossible to satisfy safety performance required as the laminated glass. Further, there is a tendency that the thicker the thickness of the intermediate film 2, the larger the width of the overflow portion formed from the intermediate film 2, and the effect of the present invention is significant. Meanwhile, it is difficult to produce a thick intermediate film, and it takes a long time to laminate a plurality of pieces of films to increase the thickness, which is unrealistic. Therefore, the thickness of the intermediate film 2 is preferably less than 4.0 mm.

The adhesive layer (S) may contain, other than the above-described thermoplastic resin, one kind or two or more kinds of various additives such as, for example, an infrared absorbent, an ultraviolet absorbent, a fluorescer, an adhesion regulator, a coupling agent, a surfactant, an antioxidant, a heat stabilizer, a light stabilizer, a dehydrating agent, a defoaming agent, an antistatic agent, and a flame retarder according to various purposes within the range not impairing the effect of the present invention, namely, within the range in which the storage modulus of the adhesive layer (S) satisfies both of the requirement (1) and the requirement (2). These additives are entirely and uniformly contained in the adhesive layer (S).

Note that the adhesive layer (S) may also partially contain a coloring material made of a dye or a pigment within the range in which the storage modulus thereof satisfies both of the requirement (1) and the requirement (2). The colored part functions, particularly when the laminated glass 10A is used as a windshield of a vehicle, as a band-shaped shade region (shade band) colored with green, blue, or the like for improving glare-proof property, heat insulating property and the like. The shade band is often arranged outside a visual field area, particularly at an upper part of the windshield.

The intermediate film 2 illustrated in FIG. 1 is made of the adhesive layer (S). The adhesive layer (S) is not limited to have a single-layer structure. The adhesive layer (S) may have a multilayer structure as long as the storage modulus thereof falls within the range where it satisfies both of the requirement (1) and the requirement (2). Further, the intermediate film 2 may also have a multilayer structure of the adhesive layer (S) and another adhesive layer which does not satisfy the requirement as the adhesive layer (S) (which is simply referred to as "another adhesive layer", hereinafter). As another adhesive layer, an adhesive layer which is normally used as an intermediate film of the laminated glass, for example, an adhesive layer which is mainly formed of the aforementioned thermoplastic resin and the like and whose storage modulus does not satisfy the requirement (1) and/or the requirement (2), is used without particular limitation.

Note that even when the intermediate film 2 has the multilayer structure including the adhesive layer (S), the total thickness of the intermediate film 2 is preferably 0.4 mm or more and less than 4.0 mm, and more preferably 0.6 to 2.0 mm, similarly to the above-described case.

As the intermediate film with the multilayer structure, there can be cited, for example, a multilayer resin film, disclosed in JP-A No. 2000-272936, which is used for the purpose of improving sound insulating performance and in which resin films different in properties (different in loss tangent) are laminated. When the intermediate film 2 has the multilayer structure of the adhesive layer (S) and another adhesive layer, a proportion of the thickness of the adhesive layer (S) to the total thickness of the intermediate film 2 is preferably 30% or more, and the proportion is more preferably 50% or more.

Further, the adhesive layer (S) may configure an intermediate film by being combined with another adhesive layer whose cross section has a shape like a wedge shape and whose thickness is non-uniform, such as one used for a head-up display. Besides, the adhesive layer (S) itself may also be formed as the adhesive layer (S) whose cross section has a shape like a wedge shape and whose thickness is non-uniform. Note that in that case, a proportion of the thickness of the adhesive layer (S) to the total thickness of the intermediate film is preferably 30% or more at a portion where a proportion of the thickness of the adhesive layer (S) to the total thickness of the intermediate film is minimum in the intermediate film.

The laminated glass 10A in which the intermediate film 2 is sandwiched between the two glass plates 1A and 1B illustrated in FIG. 1 has been described above. Next, modified examples of the laminated glass of the present invention illustrated in FIG 2 to FIG. 5, concretely, laminated glasses in each of which a functional coating layer and/or a functional film are/is applied to the laminated glass 10A, will be described.

A laminated glass 10B illustrated in FIG 2 includes a pair of glass plates 1 A and 1B facing each other, a functional coating layer 3 formed on a main surface of the glass plate 1B facing the glass plate 1A, and an intermediate film 2 arranged between the pair of glass plates 1A and 1B so as to be brought into contact with the functional coating layer 3 and arranged over the entire facing surface of the glass plate 1A.

In the laminated glass 10B, the pair of glass plates 1A and 1B, and the intermediate film 2 have rectangular main surfaces with substantially the same shape and same dimensions. The functional coating layer 3 formed on the main surface of the glass plate 1B facing the glass plate 1A, is formed so that its outer peripheral edge is positioned on the inside by a distance w1 relative to an outer peripheral edge of the glass plate 1B.

In the laminated glass 10B, w1 is preferably within 10 mm Specifically, it is preferable that the outer peripheral edge of the functional coating layer is positioned in a range of 10 mm or less from the outer peripheral edge toward a center portion of the glass plate. The distance w1 between the outer peripheral edge of the functional coating layer and the outer peripheral edge of the glass plate is more preferably within 5 mm. A lower limit of the distance w1 is 0 mm. In that case, the outer peripheral edge of the functional coating layer and the outer peripheral edge of the glass plate coincide with each other. However, when it is required to protect the edge portion of the functional coating layer from external moisture and the like, in particular, the distance w1 is preferably 1 mm or more, and particularly preferably 3 mm or more. Note that the distance w1 may be the same in the entire outer periphery of the laminated glass, it may be different for each of sides, or it may be different such that it is small or large at a predetermined place.

Note that in a front view of the laminated glass 10B, a proportion of an area of the functional coating layer 3 to an area of the laminated glass 10B is preferably 70% or more. The proportion of the area is more preferably 75% or more. Further, the proportion of the area may be increased to about 80% according to need.

The pair of glass plates 1A and 1B, and the intermediate film 2 in the laminated glass 10B can be formed similarly to the pair of glass plates 1A and 1B, and the intermediate film 2 in the laminated glass 10A. Further, as the functional coating layer 3, there can be cited a functional coating layer which is conventionally formed on a main surface of a glass plate so as to have a desired function, such as an infrared reflection layer, for example.

In the laminated glass 10B, the functional coating layer 3 is formed only on the glass plate 1B being one of the pair of glass plates 1A and 1B. The functional coating layer may also be formed on each of facing surfaces of the pair of glass plates according to need.

A laminated glass 10C illustrated in FIG. 3 includes a pair of glass plates 1A and 1B facing each other, and a pair of adhesive layers 2A and 2B which are brought into contact with facing surfaces of the pair of glass plates 1A and 1B, respectively. In the laminated glass 10C, the adhesive layer 2A and the adhesive layer 2B configure the intermediate film 2. In the laminated glass 10C, the pair of glass plates 1A and 1B, and the pair of adhesive layers 2A and 2B have rectangular main surfaces with substantially the same shape and same dimensions.

The laminated glass 10C further has, at a position between the pair of adhesive layers 2A and 2B, a functional film 4 having a main surface whose shape is substantially the same as that of each of the main surfaces of the glass plates 1A and 1B but whose area is smaller than that of each of the main surfaces of the glass plates 1A and 1B, and having an outer peripheral edge of the main surface thereof positioned on the inside by a distance w2 relative to outer peripheral edges of the main surfaces of the glass plates 1A and 1B and the main surfaces of the adhesive layers 2A and 2B. Frame-shaped peripheral edge portions at facing surfaces of the adhesive layers 2A and 2B from the outer peripheral edge of the functional film 4 to the outer peripheral edges of the main surfaces of the adhesive layers 2A and 2B are configured to be brought into contact with each other.

The pair of glass plates 1A and 1B in the laminated glass 10C can be formed similarly to the pair of glass plates 1A and 1B in the laminated glass 10A. The intermediate film 2 obtained by combining the adhesive layer 2A and the adhesive layer 2B in the laminated glass 10C can be formed similarly to the intermediate film 2 in the glass 10A. The adhesive layers 2A and 2B can be formed similarly to respective layers when the intermediate film 2 is a multilayer in the laminated glass 10A. The adhesive layers 2A and 2B may be mutually the same or different. In the intermediate film 2 in the laminated glass 10C, it is possible that one of the adhesive layer 2A and the adhesive layer 2B is the adhesive layer (S), and the other is another adhesive layer. It is more preferable that both of the adhesive layer 2A and the adhesive layer 2B are the adhesive layers (S). The adhesive layers 2A and 2B may have the same thickness or mutually different thicknesses, and, the effect of the present invention is significantly exhibited particularly when the total thickness of the intermediate film 2 becomes 1.0 mm or more.

In the laminated glass 10C, the functional film 4 has the main surface having the area smaller than that of each of the main surfaces of the glass plates 1A and 1B and having the shape which is similar to that of each of the main surfaces of the glass plates 1A and 1B, and it is arranged between the adhesive layers 2A and 2B so that the outer peripheral edge of the main surface thereof is positioned on the inside by the distance w2 relative to the outer peripheral edges of the main surfaces of the glass plates 1A and 1B. In the laminated glass 10C, all four sides of the outer peripheral edge of the functional film 4 are positioned on the inside by the distance w2 relative to the outer peripheral edges of the main surfaces of the glass plates 1A and 1B.

In the laminated glass of the present invention, w2 is preferably within 10 mm. Specifically, it is preferable that the outer peripheral edge of the functional film is positioned in a range of 10 mm or less from the outer peripheral edges toward center portions of the glass plates. The distance w2 between the outer peripheral edge of the functional film and the outer peripheral edges of the glass plates is more preferably within 5 mm. A lower limit of the distance w2 is 0 mm. In that case, the outer peripheral edge of the functional film and the outer peripheral edges of the glass plates coincide with each other. However, when it is required to protect the edge portion of the functional film from external moisture and the like, in particular, the distance w2 is preferably 1 mm or more, and particularly preferably 3 mm or more. Note that the distance w2 may be the same in the entire outer periphery of the laminated glass, it may be different for each of sides, or it may be different such that it is small or large at a predetermined place.

Note that in a front view of the laminated glass 10C, a proportion of an area of the functional film 4 to an area of the laminated glass 10C is preferably 70% or more. The proportion of the area is more preferably 75% or more. Further, the proportion of the area may be increased to about 80% according to need.

A thickness of the functional film 4 is preferably 20 µm to 1 mm from a viewpoint of handleability and deaeration treatment in a laminated glass producing step to be described later. In the laminated glass 10C having the configuration illustrated in FIG. 3, the thickness of the functional film is preferably 20 µm to 120 µm. When the thickness of the functional film is greater than 120 µm and 1 mm or less, a configuration of a laminated glass 10D whose cross section is illustrated in FIG. 4 is preferable.

The laminated glass 10D has the configuration when the thickness of the functional film 4 is large in the laminated glass 10C, and in the laminated glass 10D, the glass plates 1A and 1B, the adhesive layer 2A and the adhesive layer 2B are similar to that of the laminated glass 10C. The laminated glass 10D includes, at a position between the adhesive layer 2A and the adhesive layer 2B, a functional film 4 in which an outer peripheral edge of a main surface thereof is arranged so as to be positioned on the inside by a distance w3 relative to the outer peripheral edges of the main surfaces of the glass plates 1A and 1B, and includes an adhesive layer 2C in a shape of filling a gap of a frame-shaped portion with a width w3 on which the functional film 4 is not arranged.

The width w3 of the adhesive layer 2C is appropriately selected according to usage. A lower limit of the width w3 can be set to approximately 3 mm, although depending on the thickness of the adhesive layer 2C and the like. Note that when higher moisture-proof property is required, the lower limit of the width of the adhesive layer 2C is preferably 5 mm. In the adhesive layer 2C included in the laminated glass 10D with the rectangular main surface shape, having the outer periphery that substantially coincides with the outer periphery of each of the main surfaces of the glass plates 1A and 1B, and having the frame-shaped main surface, the width w3 at the frame-shaped portion along four sides of the rectangle may be the same or different for each of sides, and it may be partially large or small regardless of the sides.

The adhesive layer 2C is the adhesive layer arranged so that its inner peripheral surface is brought into contact with the outer peripheral surface (end face) of the functional film 4, having the outer periphery which substantially coincides with the outer periphery of each of the main surfaces of the glass plates 1A and 1B, and having the frame-shaped main surface. From a viewpoint of sufficiently protecting the end face of the functional film 4, it is preferable that a thickness of the adhesive layer 2C is substantially the same as the thickness of the functional film 4. Concretely, the thickness of the adhesive layer 2C is preferably within ±0.1 mm, and more preferably within ± 0.075 mm of the thickness of the functional film 4.

In the laminated glass 10D, the intermediate film 2 is configured by three layers of the adhesive layer 2A, the adhesive layer 2B, and the adhesive layer 2C. It is possible that, in the intermediate film 2 of the laminated glass 10D, only the adhesive layer 2C is the adhesive layer (S) and the adhesive layer 2A and the adhesive layer 2B are another adhesive layers, and, at least either the adhesive layer 2A or the adhesive layer 2B is preferably the adhesive layer (S). It is more preferable that both of the adhesive layer 2A and the adhesive layer 2B are the adhesive layers (S), and it is particularly preferable that all of the adhesive layer 2A, the adhesive layer 2B, and the adhesive layer 2C are the adhesive layers (S). The adhesive layers 2A, 2B and 2C may have the same thickness or mutually different thicknesses, and, the effect of the present invention is significantly exhibited particularly when the total thickness becomes 1.0 mm or more. Note that the thickness of the intermediate film 2 is preferably less than 4.0 mm.

As the functional film 4, concretely, there can be cited an infrared reflection film, a screen film for image projection, a light-control film, a thin solar cell film for power generation, a light-emitting film, and the like. The functional film contains a material having functions of light absorption, reflection of light, light scattering, light control, power generation, heat generation, light emission and the like, for example, thereby exhibiting these functions. The functional film 4 may be a single-layer film to configure the functional film as above, or it may be configured such that a material having functions of light absorption, reflection of light, light scattering, light control, power generation, heat generation, light emission and the like is sandwiched between two or more of films. Note that as the infrared reflection film, there can be cited an infrared reflection film which is normally used for the laminated glass, for example, a film with an infrared reflection layer in which an infrared reflection layer is arranged on one main surface of a supporting film, a dielectric multilayer film in which resin films with different refractive indices are laminated, and the like.

Although the functional film has been explained by citing examples thereof, the laminated glass of the present invention is not limited to these, and it can also adopt another functional film.

FIG 5 is a sectional view illustrating one example of an embodiment in which both of the functional coating layer and the functional film are provided in the laminated glass of the present invention. A laminated glass 10E illustrated in FIG. 5 is similar to the laminated glass 10D except that it has a functional coating layer 3 formed over the entire surface, facing the glass plate 1A, of the glass plate 1B. The functional coating layer 3 in the laminated glass 10E is similar to the functional coating layer 3 in the laminated glass 10B except for its arrangement position.

When, for example, the functional coating layer 3 in the laminated glass 10E is an infrared reflection coating layer, and the laminated glass 10E is mounted to a window frame, it is normally mounted so that the functional coating layer 3 is positioned on an outdoor side and the functional film 4 is positioned on an indoor side. If the laminated glass is arranged as above, infrared rays irradiated from the outdoor are reflected by the infrared reflection coating layer, which makes it possible to suppress deterioration of the functional film 4 due to the infrared rays.

In the laminated glass 10E, the outer peripheral edge of the functional coating layer 3 substantially coincides with the outer peripheral edges of the glass plates 1A and 1B. When the functional coating layer 3 is arranged as above, there is no need to perform, for example, alignment of the outer peripheral edges of the functional coating layer 3 and the functional film 4, which makes it possible to simplify the lamination step. However, it is also possible that the outer peripheral edge of the functional coating layer 3 is positioned on the inside relative to the outer peripheral edges of the glass plates 1A and 1B, according to need, and in that case, the outer peripheral edge of the functional coating layer 3 is preferably positioned in a range of 10 mm or less from the outer peripheral edge toward the center portion of each of the glass plates 1A and 1B.

The laminated glass of the present invention has been described above by citing the laminated glasses 10A to 10E illustrated in FIG. 1 to FIG 5 as examples, but, the present invention is not limited to these. The design can be changed or modified in a range without departing from the spirit and the scope of the present invention.

The laminated glass of the present invention may have a configuration having three or more glass plates according to need. Further, according to need, the laminated glass of the present invention may optionally have another layer within the range not impairing the effect of the present invention, in addition to the above-described components.

### [Manufacture of the laminated glass]

The laminated glass of the present invention can be manufactured by a generally used publicly-known technique illustrated in FIG 9 in which respective layers are laminated and subjected to thermocompression bonding, and then an overflow portion is cut according to need. However, in the laminated glass of the present invention, the intermediate film has the adhesive layer (S), so that the overflow portion is not formed or even if it is formed, an amount thereof is small, namely, the width (w) of the overflow portion is narrow, in the thermocompression bonding step. In the present invention, the cutting step of the overflow portion is an optional step which is appropriately performed according to the amount (width) of the overflow portion to be formed, the usage, and the like.

### (Lamination step)

For example, in the laminated glass 10A, the pair of glass plates 1A and 1B are prepared, and a laminate in which the intermediate film 2 made of the adhesive layer (S) is sandwiched between the glass plates is produced.

In the laminated glass 10B, for example, the pair of glass plates 1A and 1B are prepared, and the functional coating layer 3 is formed on a predetermined region on one main surface of the glass plate 1B. There is produced a laminate in which the glass plates 1A and 1B are arranged so that a surface of the functional coating layer 3 of the glass plate 1B with the functional coating layer 3 with respect to the glass plate 1A faces one main surface of the glass plate 1A, and the intermediate film 2 made of the adhesive layer (S) is inserted in between the glass plates 1A and 1B to be laminated. Also in the case of having another layer, in a similar manner, glass plates and respective layers are laminated in the same lamination order to that of the obtained laminated glass, to thereby produce a laminate.

Further, for example, in the laminated glass 10C, a laminate in which the functional film 4 is arranged to be located in a predetermined positional relationship between the pair of adhesive layers 2A and 2B (either or preferably both of them is/are made of the adhesive layer (S)) is produced, and the laminate is inserted in between the pair of glass plates 1A and 1B to produce a laminate in which the glass plate 1A, the adhesive layer 2A, the functional film 4, the adhesive layer 2B, and the glass plate 1B are laminated in this order. Also in the case of having another layer, in a similar manner, glass plates and respective layers are laminated in the same lamination order to that of the obtained laminated glass, to thereby produce a laminate.

### (Thermocompression bonding step)

The laminate prepared in the lamination step is put in a vacuum bag such as a rubber bag, the vacuum bag is connected to an exhaust system, bonding is performed at a temperature of 90 to 120°C while pressure-reduction suction (deaeration) is performed so that a pressure in the vacuum bag becomes a pressure reduction degree of -65 to -100 kPa, whereby a laminated glass precursor in which an overflow portion is formed can be obtained.

Further, by making the laminated glass precursor to be subjected to additional thermocompression bonding treatment of heating and pressurizing it under conditions of 100 to 150°C and a pressure of 0.6 to 1.3 MPa, for example, it is possible to obtain the laminated glass with further excellent durability. According to circumstances, this additional thermocompression bonding step is sometimes not performed by considering simplification of the step, and the characteristic of the material to be sealed in the laminated glass. The present invention is more effective in the case where this additional thermocompression bonding step is not performed. Further, the thermocompression bonding step can also be executed through rubber channel treatment.

### (Overflow portion cutting step)

The laminated glass precursor obtained by the above-described thermocompression bonding step is returned to a room temperature, and then when there is an overflow portion of the intermediate film protruded from the ends of the glass plates, the overflow portion of the intermediate film is cut by a normal method according to need by using a cutter such as a commercially available cutter knife, razor, or carving knife. By cutting the overflow portion, an appearance quality of the laminated glass is increased, and a portion to be an obstacle when the laminated glass is assembled into a vehicle such as an automobile is removed. Note that when the cutting tool is used to cut the intermediate film, an angle at which the cutting edge is placed is desirably as perpendicular as possible with respect to the main surface of the glass plate. The laminated glass of the present invention is manufactured in the manner as described above.

Note that when, in the laminated glass precursor obtained as above, the overflow portion is not formed or the formation amount of the overflow portion is small, concretely, the width of the overflow portion is small and thus there is no need to cut the overflow portion, the laminated glass precursor after the thermocompression bonding step is used as it is as the laminated glass.

In the laminated glass of the present invention, the intermediate film has the adhesive layer (S) as described above, so that the amount of the overflow portion formed in the thermocompression bonding step is small. Further, in the overflow portion cutting step, the overflow portion included in the laminated glass precursor can be easily cut by using a normal equipment. Besides, in the obtained laminated glass, there is also no problem regarding the design of the cut surface of the overflow portion of the intermediate film.

The laminated glass of the present invention is the laminated glass in which the reduction in the design and the productivity due to the overflow portion of the intermediate film is improved, in particular, the laminated glass having the functional film inside thereof in which the above-described point is improved, and is suitably used for window glass for vehicle, window glass for building and the like.

### EXPLANATION OF REFERENCE SIGNS

10A, 10B, 10C, 10D, 10E ... laminated glass; 1A, 1B ... glass plate; 2 ... intermediate film; 2A, 2B, 2C ... adhesive layer; 3 ... functional coating layer; 4 ... functional film.

## Claims

1. A laminated glass, comprising: a pair of glass plates facing each other; and an intermediate film having one or more layers provided between the pair of glass plates, wherein
the intermediate film has an adhesive layer whose storage modulus satisfies the following requirements (1) and (2) in dynamic viscoelasticity measurement at a measurement frequency of 10 Hz:
(1) the storage modulus has a maximum value of 2.3 × 10⁶ Pa or more in a temperature range of 90 to 120°C; and
(2) the storage modulus has any value within a range of 1.0 × 10⁸ to 4.0 × 10⁸ Pa in a temperature range of 20 to 40°C.

2. The laminated glass according to claim 1, wherein
the storage modulus of the adhesive layer has any value within a range of 2.3 × 10⁶ Pa or more and less than 1.0 × 10⁷ Pa in the temperature range of 90 to 120°C in the dynamic viscoelasticity measurement at the measurement frequency of 10 Hz.

3. The laminated glass according to claim 1 or 2, further comprising
a functional coating layer on at least one surface of facing surfaces of the pair of glass plates.

4. The laminated glass according to any one of claims 1 to 3, wherein
the intermediate film is configured of at least two layers, and a functional film is provided between layers of the intermediate film.

5. The laminated glass according to claim 4, wherein
the functional film contains a material which exhibits any of light absorption, reflection of light, light scattering, light control, power generation, heat generation, and light emission.

6. The laminated glass according to any one of claims 1 to 5, wherein
a thickness of the adhesive layer occupies 30% or more of a total thickness of the intermediate film.

7. The laminated glass according to any one of claims 1 to 6, wherein the total thickness of the intermediate film is 0.4 mm or more and less than 4.0 mm.
